Europäisches Patentamt

European Patent Office

Office européen des brevets

(19)

(11) **EP 0 886 154 A1**

(12) **DEMANDE DE BREVET EUROPEEN**

(43) Date de publication:
**23.12.1998  Bulletin 1998/52**

(51) Int Cl.6: **G02B 6/16**, G02B 6/44

(21) Numéro de dépôt: **98401452.2**

(22) Date de dépôt: **15.06.1998**

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **19.06.1997  FR 9707633**

(71) Demandeur: **ALCATEL ALSTHOM COMPAGNIE
GENERALE D'ELECTRICITE**
**75008 Paris (FR)**

(72) Inventeurs:
• **McNutt, Christopher**
  **Hickory, NC 28602 (US)**
• **Yang, Michael**
  **NE Conover, NC 28619 (US)**

(74) Mandataire: **Feray, Valérie et al**
**COMPAGNIE FINANCIERE ALCATEL**
**Dépt. Propriété Industrielle,**
**30, avenue Kléber**
**75116 Paris (FR)**

(54) **Conducteur optique et ruban de conducteurs optiques**

(57)     L'invention est relative à un conducteur optique et à un ruban de conducteurs optiques.

Le conducteur optique est du type monomode. Il comprend une fibre optique (12) couverte par une couche primaire (14), elle-même entourée par une couche secondaire.

Pour réduire le coût de fabrication du conducteur, la couche secondaire comporte une partie externe (18) en matière thermoplastique dont la viscosité apparente à la température de fusion est au maximum d'environ 100 Pascal-seconde à une vitesse de cisaillement au moins égale à 100 $s^{-1}$. La couche primaire (14) et la partie interne (16) de la couche secondaire sont par exemple en une résine réticulable aux ultraviolets.

FIG.1

## Description

L'invention est relative à un conducteur optique et à un faisceau ou ruban de conducteurs optiques.

Les conducteurs optiques sont de plus en plus utilisés pour transmettre des informations. Ils sont fabriqués en grandes quantités. Il est donc essentiel que les matériaux qui les composent soient à bas prix et que les procédés de fabrication soient simples et nécessitent un équipement bon marché. En particulier les revêtements protégeant la fibre optique entrent pour une part importante dans le coût de fabrication d'un conducteur optique ; il serait donc souhaitable de réduire le coût des matériaux de revêtement et le prix du procédé de fabrication.

L'invention concerne plus particulièrement un conducteur optique à fibre monomode qui comporte une fibre optique proprement dite, d'un diamètre d'environ 125 µ, et une protection comprenant une première couche, dite couche primaire, d'un diamètre extérieur de 185 µ, dont le matériau est sélectionné pour ne pas endommager la fibre de verre. Cette couche primaire est elle même protégée par une couche secondaire, constituée d'une matière plastique plus rigide et plus résistante que celle constituant la couche primaire, et dont le diamètre extérieur est de l'ordre de 245 µ. Elle est quelquefois enrobée d'une encre d'une couleur donnée destinée à identifier le conducteur.

Les matériaux des couches primaire et secondaire et l'encre sont des acrylates réticulables au rayonnement ultraviolet. Ces matériaux sont chers et leur procédé de fabrication est onéreux.

Par ailleurs, plusieurs conducteurs optiques sont souvent assemblés pour former un faisceau ou ruban. Un ruban comprend le plus souvent quatre ou douze conducteurs optiques. Pour assembler des conducteurs on utilise également une résine réticulable au rayonnement ultraviolet qui, comme les matériaux de protection d'un conducteur, est d'un coût élevé.

L'invention vise à réduire le coût des conducteurs optiques et rubans de conducteurs optiques et à simplifier leur procédé de fabrication.

Selon un premier de ses aspects, l'invention concerne un conducteur optique monomode qui est caractérisé en ce que la couche secondaire comporte une couche externe en une matière thermoplastique dont la viscosité apparente à la température de fusion est au maximum d'environ 100 Pascal-seconde (Pa.sec) à une vitesse, ou taux, de cisaillement au moins égal à 100 s⁻¹. Cette matière thermoplastique doit, en outre, présenter les caractéristiques habituelles d'un revêtement pour fibre optique, à savoir, de préférence, une température de fusion d'au plus 190°C, un module d'élasticité d'au moins 800 MPa à 25°C, et un coefficient de dilatation thermique inférieur à $1,5 \cdot 10^{-4}$ K⁻¹ à 20°C.

Les matières thermoplastiques pouvant convenir peuvent être sélectionnées dans les familles suivantes : polyamides, notamment les polyamides 12, 6 ou 6/6, les polyoléfines, les polyesters, les polyéthers et les copolymères de ces matériaux.

Il est à noter que l'utilisation de matières thermoplastiques pour former les revêtements de conducteurs optiques a été souvent suggérée, mais on a constaté que l'état antérieur de la technique ne fournissait pas d'enseignement permettant une sélection d'une matière thermoplastique apportant une protection suffisante et permettant une fabrication en grande série. On pense que les tentatives antérieures ont échoué en raison du choix de matières thermoplastiques d'un poids moléculaire trop élevé, et donc d'une viscosité trop importante, pour permettre une fabrication rapide. En effet plus la viscosité est grande, plus l'extrusion doit être effectuée lentement afin que la matière thermoplastique se dépose correctement sur le support choisi.

Le choix d'une viscosité d'au plus 100 Pa.sec permet une extrusion dans les mêmes conditions de rapidité qu'avec un revêtement usuel. La vitesse d'extrusion est de l'ordre de 200 à 800 m/minute.

Dans un mode de réalisation, la couche secondaire présente une couche interne d'un diamètre extérieur de 200 µ environ qui est, de façon classique, en résine réticulable au rayonnement ultraviolet.

L'invention se rapporte, selon un second de ses aspects - qui s'utilise indépendamment ou en combinaison avec le premier aspect - un ruban de conducteurs optiques caractérisé en ce que le matériau d'assemblage enrobant les conducteurs optiques comporte une matière thermoplastique dont la viscosité apparente à la température de fusion est au maximum 100 Pa.sec à une vitesse, ou taux, de cisaillement au moins égale à 100 S⁻¹.

Il est également préférable que cette matière thermoplastique présente une température de fusion d'au plus 190°C, un module d'élasticité d'au moins 800 MPa à 25°C, et un coefficient de dilatation thermique inférieur à $1,5 \cdot 10^{-4}$ K⁻¹ à 20°C.

Les matières plastiques pouvant convenir sont les mêmes que celles utilisables pour le premier aspect de l'invention.

Quel que soit son mode de réalisation, l'invention permet une réduction importante du coût des matériaux et une simplification du procédé de fabrication, notamment pour la fabrication de rubans qui ne nécessitent plus d'exposition au rayonnement ultraviolet.

D'autres caractéristiques et avantages de l'invention apparaîtront avec la description de certain de ses modes de réalisation, celle-ci étant effectuée en se référant aux dessins ci-annexés sur lesquels :

la figure 1 est un schéma en coupe d'un conducteur optique selon l'invention,
la figure 2 est un schéma d'un ruban de conducteurs optiques selon l'invention, et
la figure 3 est un schéma servant à expliquer la viscosité.

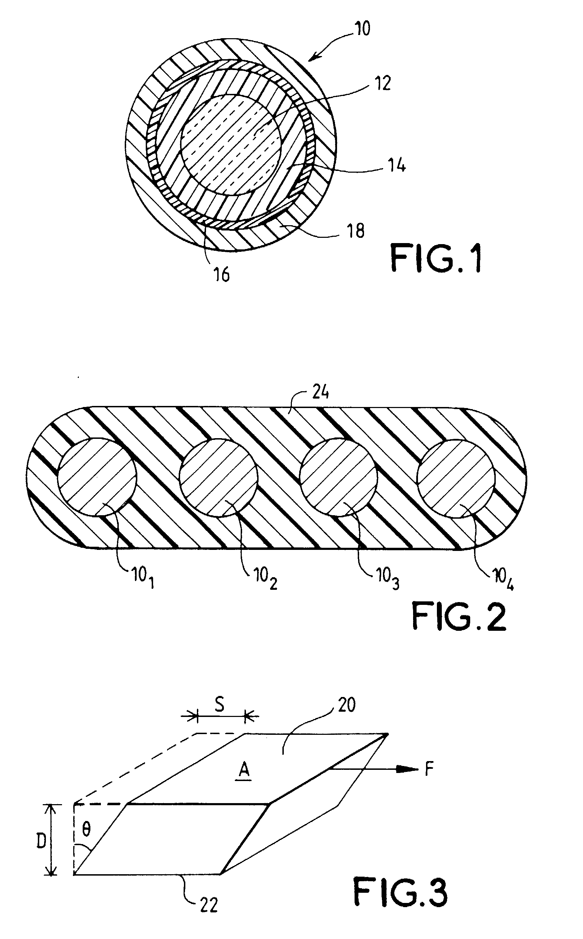

Sur la figure 1 on a représenté un conducteur optique qui comporte, de façon classique, une fibre optique 12 de diamètre extérieur 125 μ. Cette fibre est entourée par une couche primaire 14 de diamètre extérieur 185 μ qui est réalisée en une résine réticulable au rayonnement ultraviolet. La matière plastique constituant la couche primaire 14 est, aussi de façon classique, d'une flexibilité et d'une composition telles qu'elle n'entraîne pas de dégradation du verre.

Cette couche primaire 14 est, selon l'invention, entourée par une couche secondaire en deux parties 16 et 18. La partie interne 16 présente un diamètre extérieur de 200 μ environ. Elle est constituée d'un acrylate réticulable au rayonnement ultraviolet. Sa résistance mécanique est supérieure à celle de la couche primaire 14.

La partie externe 18 du revêtement secondaire présente un diamètre extérieur de l'ordre de 245 μ. Elle est constituée par une matière thermoplastique qui est, dans l'exemple, un polyamide 12, généralement connu sous la marque "NYLON 12". La famille de matériaux que constituent les polyamides 12 contient des matériaux de poids moléculaires divers ; le poids moléculaire est ici choisi de façon telle que la viscosité apparente à la température de fusion soit au maximum d'environ 100 Pa.sec à une vitesse de cisaillement au moins égale à 100 $S^{-1}$.

De préférence, la température de fusion est d'au plus 190°C. En outre, le module d'élasticité de cette matière thermoplastique est d'au moins 800 MPa à 25°C et son coefficient de dilatation thermique est inférieur à $1,5 \cdot 10^{-4} K^{-1}$ à 20°C.

On rappelle ici comment est définie la viscosité.

Quand un liquide est confiné entre deux plaques planes 20 et 22 (figure 3) d'aires A, et séparées par une distance D, une force F est nécessaire pour déplacer la plaque supérieure 20 à une vitesse constante par rapport à la plaque inférieure 22. Cette force est directement proportionnelle à la viscosité. La viscosité η est mesurée en faisant intervenir l'effort τ de cisaillement et la contrainte de cisaillement γ.

L'effort τ de cisaillement est défini par la relation suivante :

$$(1) \qquad \tau = \frac{F}{A}$$

La force F est appelée force de cisaillement. A est l'aire des plaques 20 et 22 (figure 3).

La contrainte de cisaillement γ a pour valeur :

$$(2) \qquad \gamma = \frac{S}{D} = \mathrm{tg}\theta$$

Dans cette formule S (figure 3) est le déplacement dû au cisaillement et D est la distance entre les plaques 20 et 22. Cette contrainte γ est un nombre sans dimension.

Enfin, la viscosité se définie comme suit :

$$(3) \qquad \eta = \frac{\tau}{\mathrm{d}\gamma / \mathrm{d}t}$$

Dans cette formule $\frac{\mathrm{d}\gamma}{\mathrm{d}t}$ est la dérivée de la contrainte de cisaillement par rapport au temps. Elle est appelée taux, ou vitesse, de cisaillement. Elle est mesurée en $seconde^{-1}$ ($s^{-1}$).

Une matière thermoplastique n'est en général pas newtonienne, c'est-à-dire que la viscosité dépend de la vitesse de cisaillement.

Avec une matière thermoplastique présentant les caractéristiques mentionnées ci-dessus on pourra aisément réaliser la couche 18 par extrusion ou analogue sans qu'il soit besoin d'effectuer une réticulation par exposition au rayonnement ultraviolet.

La caractéristique de viscosité indiquée ci-dessus est rendue nécessaire par le fait que si la viscosité était trop importante il en résulterait, lors du défilement des conducteurs en cours de fabrication dans une extrudeuse, un effort qui pourrait altérer les couches 16 et/ou 14 formées préalablement.

L'homme de métier pourra aisément sélectionner un polyamide 12 remplissant les conditions de viscosité, de température de fusion, d'élasticité et de coefficient de dilatation thermique indiquées ci-dessus, ainsi que d'autres conditions telles que la faible perméabilité à l'humidité, la résistance au vieillissement et la résistance aux agressions chimiques.

En général, la perméabilité à l'humidité devrait être inférieure à 0,01 unités ASTM (American Standard Test Method). Pour les caractéristiques de vieillissement la matière plastique devra avantageusement être sélectionnée de façon qu'elle ne présente pas de variation de couleur au bout de cent jours après un chauffage à 85°C avec un taux d'humidité relative de 85 % ou après avoir été plongée dans l'eau pendant cent jours à 85°C. Ces mêmes essais ne doivent entraîner aucun changement des propriétés mécaniques au bout de trente jours.

La résistance aux agressions chimiques est mesurée en général à 25°C. Les essais habituellement effectués imposent une résistance d'une semaine après exposition au propanol, à l'ammoniac et à un insecticide, une résistance d'une journée à l'acétone, une résistance d'une à deux heure(s) à un carburant et une résistance de longue durée (20 ans) au polyol qui constitue le gel habituellement introduit dans les câbles pour s'opposer à la propagation de l'eau.

Au cours d'essais effectués dans le cadre de l'invention, on a constaté que les polyamides 12 de références GRILAMID L16 et L20 de la société EMS répondent aux spécifications. On peut également utiliser les polyamides 12 de références GRILAMID L16L, L16LM, L20L et L20LM de la même société.

L'invention concerne aussi la fabrication d'un ruban formé d'une pluralité de conducteurs optiques $10_1$, $10_2$, $10_3$, $10_4$ (figure 2) qui sont assemblés avec une matière thermoplastique 24 enrobant les conducteurs optiques individuels. Chacun de ces conducteurs optiques $10_1$, $10_2$, $10_3$, $10_4$ est, de préférence, conforme au mode de réalisation décrit en relation avec la figure 1. Par ailleurs, la matière thermoplastique 24 présente les mêmes propriétés que la matière plastique utilisée pour réaliser la couche 18 du conducteur de la figure 1. Toutefois, la sélection du matériau dans une famille, par exemple celle des polyamides 12, pourra être moins sévère, car les contraintes sur ce matériau sont moins importantes. En particulier, la résistance à l'humidité peut être moins sévère.

Les essais effectués dans le cadre de l'invention ont montré que pour un ruban on pouvait utiliser le notamment le polyamide 12 vendu sous la dénomination GRILAMID L16, L20, L16L, L16LM, L20L et L20LM par la société EMS.

## Revendications

1. Conducteur optique monomode comprenant une fibre optique (12) couverte par une couche primaire (14) elle-même entourée par une couche secondaire, caractérisé en ce que la couche secondaire comporte une partie externe (18) en matière thermoplastique dont la viscosité apparente à la température de fusion est d'au maximum d'environ 100 Pa.sec à une vitesse de cisaillement au moins égale à 100 $s^{-1}$.

2. Ruban ou faisceau de conducteurs optiques, caractérisé en ce que le matériau d'assemblage (24) entre les conducteurs optiques ($10_1$, $10_2$, $10_3$, $10_4$) comporte une matière thermoplastique dont la viscosité apparente à la température de fusion est d'au maximum d'environ 100 Pa.sec à une vitesse de cisaillement au moins égale à 100 $s^{-1}$.

3. Conducteur ou ruban selon la revendication 1 ou 2, caractérisé en ce que la température de fusion de la matière thermoplastique est d'au plus 190°C.

4. Conducteur ou ruban selon l'une quelconque des revendications 1 à 3, caractérisé en ce que le module d'élasticité de la matière thermoplastique est d'au moins 800 MPa à 25°C.

5. Conducteur ou ruban selon l'une quelconque des revendications 1 à 4, caractérisé en ce que le coefficient de dilatation thermique de la matière plastique est inférieur à 1,5 . $10^{-4}$ $K^{-1}$ à 20°C.

6. Conducteur ou ruban selon l'une quelconque des revendications précédentes, caractérisé en ce que la matière thermoplastique fait partie de l'une des familles suivantes : polyamide, polyoléfine, polyester, polyéther et copolymères de plusieurs de ces matériaux.

7. Conducteur ou ruban selon la revendication 6, caractérisé en ce que la matière thermoplastique est un polyamide, et en ce que ce polyamide est sélectionné dans la famille suivante : polyamide 12, polyamide 6, polyamide 6/6 et un composé de ces polyamides.

8. Conducteur optique selon la revendication 1, caractérisé en ce que le diamètre extérieur de la couche thermoplastique (18) est de l'ordre de 245 $\mu$.

9. Conducteur optique selon la revendication 1 ou 8, caractérisé en ce que la partie interne (16) de la couche secondaire présente un diamètre externe de l'ordre de 200 $\mu$.

10. Conducteur ou ruban selon l'une quelconque des revendications précédentes, caractérisé en ce que la couche primaire (14) et la partie interne (16) de la couche secondaire comprennent une résine réticulable aux rayonnements ultraviolets.

11. Ruban selon la revendication 2, caractérisé en ce que le diamètre externe de chaque conducteur optique est de l'ordre de 245 $\mu$.

FIG.1

FIG.2

FIG.3

**Office européen des brevets**

# RAPPORT DE RECHERCHE EUROPEENNE

Numéro de la demande

EP 98 40 1452

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DE 25 12 312 A (SUMITOMO ELECTRIC INDUSTRIES) 9 octobre 1975 * revendications; figures * --- | 1-4,6-8 | G02B6/16 G02B6/44 |
| A | EP 0 213 680 A (PHILIPS NV) 11 mars 1987 * revendications; figures * --- | 1,10 | |
| A | EP 0 311 186 A (PHILIPS NV) 12 avril 1989 * revendications; figures * ----- | 1 | |

**DOMAINES TECHNIQUES RECHERCHES (Int.Cl.6)**

G02B

Le présent rapport a été établi pour toutes les revendications

| Lieu de la recherche | Date d'achèvement de la recherche | Examinateur |
|---|---|---|
| LA HAYE | 16 septembre 1998 | Pfahler, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)